# EUROPÄISCHE PATENTSCHRIFT

(11) **EP 2 374 562 B1**
(45) Veröffentlichungstag und Bekanntmachung des Hinweises auf die Patenterteilung: **21.11.2012**
(21) Anmeldenummer: 11165616.1
(22) Anmeldetag: 09.04.2005
(51) Int. Cl.: B22F 9/22, C22B 5/12, C22B 34/24, H01G 9/042

(54) **Tantalpulver mit spezifischer Oberfläche**
Tantalum powder with specific surface area
Poudre de tantale avec surface specifique

(30) Priorität: 23.04.2004 DE 102004020052
(43) Veröffentlichungstag der Anmeldung: 12.10.2011
(62) Teilanmeldung aus: 08166120.9
(73) Patentinhaber: H.C. Starck GmbH, 38642 Goslar (DE); H.C. Starck Ltd., Chiyoda-ku Tokyo 100-8266 (JP)
(72) Erfinder: Haas, Helmut, 38312, Achim (DE); Bartmann, Ullrich, 38640, Goslar (DE); Komeya, Tadashi, Kujigun Ibaraki 313-0125 (JP); Sato, Nobuyuki, Kanagawa, 253-0041 (JP)
(74) Vertreter: Ambor, Volker

(56) Entgegenhaltungen:
- EP-A2- 1 302 263
- WO-A-00/67936
- JP-A- 2003 013 115

## Beschreibung

Die vorliegende Erfindung betrifft ein Verfahren zur Herstellung von Ventilmetallpulvern hoher spezifischer Oberfläche aus den entsprechenden Oxiden mittels gasförmiger reduzierender Metalle und/oder Metallhydride und ferner ein Verfahren zur Herstellung von Tantalpulvern, das als Anodenmaterial für Elektrolytkondensatoren hoher spezifischer Kapazität geeignet ist.

Das Verfahren beruht auf der Reduktion von Ventilmetalloxidpulvem mittels dampfförmiger reduzierender Metalle wie Alkalimetalle, Aluminium, Magnesium, Calcium, Barium und/oder Lanthan und/oder deren Hydride, insbesondere Magnesium.

Erfindungsgemäß werden als Ventilmetalloxide Oxide von Titan, Zirkon, Hafnium, Vanadium, Niob, Tantal, Molybdän und/ oder Wolfram, vorzugsweise von Niob und/oder Tantal, eingesetzt.

Ein derartiges Verfahren ist aus der WO 00/67936 A1 bekannt. Nach den dort offenbarten Beispielen wird feinteiliges, teilversintertes Tantalpentoxid, das auf einem Netz aus Tantaldraht eine poröse Schüttung bildet, mittels Magnesiumdampf, der unterhalb des Netzes durch Erhitzen von Magnesiumspänen erzeugt wird, bei 900 bis 1000°C unter Argon-Schutzgas zum Metall reduziert. Der Magnesiumdampfpartialdruck beträgt in diesem Temperaturbereich ca. 150 bis 400 hPa (=mbar). Die Reduktionszeit beträgt zwischen 2 bis 12 Stunden. Es werden Metallpulver mit spezifischen Oberflächen von 2 bis 7 m²/g erhalten, in einem Falle (Beispiel 4) ist eine spezifische Oberfläche von 13,3 m²/g angegeben, allerdings fehlen bei diesem Beispiel die Angabe der Reduktionsdauer und des Sauerstoffgehaltes des Reduktionsproduktes. Aufgrund der vergleichsweise hohen Reduktionstemperatur ist davon auszugehen, dass es sich hierbei um ein unvollständig reduziertes Pulver mit hoher Defektstruktur handelt, bei dem die Reduktion nach der anfänglichen Desintegration des Ausgangsoxides aufgrund der großen Volumenschrumpfung und vor der bei der Reduktionstemperatur sich anschließenden Kristallverdichtung und Primärstrukturvergröberung (Verkleinerung der spezifischen Oberfläche) abgebrochen wurde.

Gemäß EP 1 302 263 A2 soll in einer ersten Reduktionsstufe mit gasförmigem Magnesium eine unvollständige Reduktion zu TaO₀,_{6 ...0,35} durchgeführt werden und danach in einer zweiten Stufe mit flüssigem Magnesium die Reduktion zum Metall erfolgen. Angaben über die spezifische Oberfläche nach der ersten Reduktionsstufe fehlen. Eine Rückrechnung der Beispiele unter der Annahme, dass der Restsauerstoff der den Abbrand bei Luftzutritt verhindernde Oberflächensauerstoff von 3000 µg/m² ist, ergibt spezifische Oberflächen von 6 m²/g für TaO₀,₂ bzw. 4,5 m²/g für TaO₀,₁₅. Aufgrund der Charakterisierung als ,,unvollständig reduziert" dürften wesentliche Teile des Restsauerstoffs Volumensauerstoff sein, so dass die tatsächliche spezifische Oberfläche geringer ist.

JP 2003013115 A beschreibt ein Verfahren zur Herstellung von Niob- oder Tantalpulver, wobei die Tantal- oder Nioboxide mit Alkali- oder Erdalkali-Metallen reduziert werden. Dabei werden Metallpulver mit einer spezifischen Oberfläche BET von 7 bis 13 m²/g erhalten.

Aufgabe der vorliegenden Erfindung war es, ein Tantalpulver gemäß Anspruch 1 herzustellen durch ein Verfahren, das die Herstellung von Ventilmetallpulvern hoher spezifischer Oberfläche erlaubt, wobei Agglomeratteilchen der Ventilmetallpulver eine hohe Stabilität aufweisen sollen.

Es wurde nun gefunden, dass in der ersten Reduktionsstufe Ventilmetallpulver mit sehr dichter Primärstruktur und großer spezifischer Oberfläche erhalten werden, deren Sauerstoffgehalt den erforderlichen oberflächlichen Passivierungssauerstoff gegen Abbrand von 3000 µg/m² nicht übersteigt, wenn die Reduktion des Ventilmetalloxides, insbesondere Tantalpentoxides, bei geringem Dampfdruck des reduzierenden Metalls bzw. Metallhydrides und geringem Trägergasdruck und somit auch einem geringen Gesamtdruck im Reaktionsraum durchgeführt wird.

Gegenstand der vorliegenden Erfindung ist dem gemäß ein Tantalpulver hergestellt durch Reduktion entsprechender Ventilmetalloxidpulver mittels dampfförmiger reduzierender Metalle wie Alkalimetalle, Aluminium, Magnesium, Calcium, Barium und/oder Lanthan und/oder deren Hydride, wobei das Verfahren dadurch gekennzeichnet ist, dass die Reduktion bei einem Dampfpartialdruck des reduzierenden Metalls/Metallhydrides von 5 bis 110 hPa durchgeführt wird und der Gesamtdruck im Reaktionsraum während der gesamten oder eines Teils der Reduktionsdauer kleiner 1000 hPa beträgt.

Der Dampfdruck des reduzierenden Metalls beträgt vorzugsweise weniger als 80 hPa, insbesondere bevorzugt zwischen 8 und 50 hPa.

Bevorzugt wird als reduzierendes Metall Magnesium und/oder Magnesiumhydrid eingesetzt.

Vorzugsweise wird in Gegenwart eines inerten Trägergases reduziert, wobei der Partialdruck des Trägergases vorzugsweise 50 bis 800 hPa beträgt, besonders bevorzugt weniger als 600 hPa, insbesondere bevorzugt 100 bis 500 hPa.

Als inertes Trägergas sind inerte Gase wie Helium, Neon, Argon oder deren Mischungen geeignet. Vorteilhaft können geringe Zusätze von Wasserstoff sein. Das Trägergas wird vorzugsweise vor oder während der Einleitung in den Reaktor auf die Reaktortemperatur vorgewärmt, so dass eine Dampfkondensation des reduzierenden Metalls vermieden wird.

Der Gesamtdruck im Reaktionsraum setzt sich zusammen aus Dampfdruck des reduzierenden Metalls/Metallhydrids und Partialdruck des inerten Trägergases und liegt erfindungsgemäß während der Reduktion zumindest zeitweise unter 1000 hPa (1 bar). Beispielsweise liegt der Gesamtdruck während mindestens der Hälfte der Reduktionsdauer unter 1000 hPa, vorzugsweise während mindestens 60 % der Reduktionsdauer.

Vorzugsweise liegt der Gesamtdruck während der Reduktion zumindest zeitweise zwischen 55 und 910 hPa, insbesondere bevorzugt zwischen 105 und 610 hPa.

Die Reaktortemperatur wird bei oder geringfügig oberhalb der Temperatur, bei der sich der Dampfdruck des reduzierenden Metalls einstellt, gehalten, mindestens jedoch bei einer Temperatur, bei der die Reduktion noch hinreichend schnell fortschreitet. Im Falle, dass das bevorzugte Reduktionsmittel Magnesium eingesetzt wird, beträgt die Reaktortemperatur vorzugsweise 680 bis 880°C, vorzugsweise weniger als 850°C, insbesondere bevorzugt 690 bis 800°C und weiter bevorzugt weniger als 760°C.

Die Erfindung wird vorzugsweise zur Herstellung von Niob- oder Tantalpulver eingesetzt, insbesondere zur Reduktion von Tantalpentoxidpulver zu Tantalpulver oder Niobpentoxidpulver zu Niobpulver.

Gegenstand der vorliegenden Erfindung ist dem gemäß auch ein Verfahren zur Herstellung von Tantalpulver durch Reduktion von Tantalpentoxid mittels dampfförmiger reduzierender Metalle wie Alkalimetalle, Aluminium, Magnesium, Calcium, Barium und/oder Lanthan und/oder deren Hydride, insbesondere Magnesium, vorzugsweise unter einem inerten Trägergas, das dadurch gekennzeichnet ist, dass die Reduktion bei einem Dampfpartialdruck des reduzierenden Metalls/Metallhydrides von 5 bis 110 hPa durchgeführt wird und der Gesamtdruck im Reaktionsraum während der gesamten oder eines Teils der Reduktionsdauer kleiner 1000 hPa beträgt.

Bevorzugt erfolgt die Reduktion und die Erzeugung des Dampfes des reduzierenden Metalls in einem einheitlichen Reaktor, so dass die Reaktortemperatur zugleich den Dampfdruck des reduzierenden Metalls bestimmt.

Als Tantalpentoxidpulver wird vorzugsweise ein poröses, schwammartiges Pulver mit nach ASTM B 822 (Gerät Malvern MasterSizer Sµ) bestimmter Teilchengrößenverteilung von D10: 3 bis 25 µm, D50: 15 bis 80 µm und D90: 50 bis 280 µm und einer nach ASTM D 3663 bestimmten Oberfläche (BET) von 0,05 bis 0,5 m²/g eingesetzt.

Nach Beendigung der Reduktion erfolgt eine Passivierung der erhaltenen Metallpulver durch Oxidation der Pulverteilchenoberfläche durch kontrollierte allmähliche Sauerstoffeinleitung in den Reaktor nach Abkühlung auf eine Temperatur unterhalb 100°C und Auswaschung des gebildeten Oxides des reduzierenden Metalls mittels Säuren und Wasser.

Dabei werden Tantalpulver mit spezifischen Oberflächen von 6 bis 15 m²/g, vorzugsweise 8 bis 14 m²/g, im wesentlichen unter Erhaltung der Teilchengrößenverteilung des Ausgangsoxides mit bereits hervorragender mechanischer Stabilität der Teilchen erhalten. Der Sauerstoffgehalt des Tantalpulvers nach Passivierung liegt bei ca. 3000 µg/m².

Das Verfahren erlaubt es, die Reduktionstemperatur auf 680 bis 880°C, ohne wesentliche Verlängerung der Reduktionszeit, abzusenken. Bei Einsatz von Tantal- oder Nioboxidagglomeratpulvern mit Primärteilchengrößen (Durchmesser bei sphärischen Primärteilchen, geringste Abmessung bei nichtsphärischen Primärteilchen) von 0,1 bis 5 µm sind Reduktionszeiten zwischen 6 und 12 Stunden, vorzugsweise bis zu 9 Stunden ausreichend. Nicht zuletzt bedingt die geringere Reaktionstemperatur eine nicht unerhebliche Einsparung von Energie und die Schonung von bei der Reduktion erforderlichen verfahrenstechnischen Apparaten.

Vorzugsweise wird der Dampfpartialdruck des reduzierenden Metalls während der Reduktion allmählich erhöht, um die durch den abnehmenden Sauerstoffgehalt des eingesetzten Ventilmetallpulvers abnehmende Reduktionsrate und Exothermie zu kompensieren. Beispielsweise kann im Falle von Magnesium die den Dampfdruck bestimmende Temperatur zu Beginn der Reduktion im Bereich von 700 bis 750°C liegen und bis zur Beendigung der Reduktion auf eine Temperatur im Bereich von 750 bis 850°C gesteigert werden. Vorzugsweise wird die Temperatur um eine Differenz von 50 bis 100°C gesteigert.

Das Verfahren kann mit stationärem Gasdruck, d.h. in einem geschlossenen Reaktor, der die für den Gaspartialdruck bei Arbeitstemperatur erforderliche Menge an inertem Trägergas enthält, durchgeführt werden. Bevorzugt ist jedoch, dass der Reaktor und die poröse Schüttung des zu reduzierenden Oxides von dem inerten Trägergas durchströmt wird. Dies kann dadurch erfolgen, dass an einer Stelle des Reaktors stetig oder intermittierend inertes Trägergas abgezogen wird und an einer Stelle über ein entsprechendes Druckregelventil stetig oder intermittierend inertes Trägergas dem Reaktor zugeführt wird, wobei die von der Schüttung des zu reduzierenden Oxides örtlich getrennte Verdampfungsquelle des reduzierenden Metalles bzw. Metallhydrides in Bezug auf die Strömungsrichtung des inerten Trägergases durch die Oxidschüttung stromauf angeordnet ist.

Nach einer bevorzugten Ausführungsform wird die Reduktion bei abnehmendem Partialdruck des inerten Trägergases durchgeführt, wobei der Enddruck 50 bis 250 hPa, besonders bevorzugt 50 bis 150 hPa, beträgt.

Nach einer verfahrenstechnischen Alternative kann zu Beginn der Reaktion der Gasdruck über Normaldruck erhöht werden, sodass die anfängliche Diffusionsgeschwindigkeit des Metall- bzw. Hydriddampfes entsprechend dem noch hohen Sauerstoffgehalt des Oxides reduziert wird. Dadurch wird eine anfängliche Aufheizung des Oxidpulvers durch Exothermie vermieden. Beispielsweise kann der Druck des inerten Trägergases zwischen 1000 und 2000 hPa, vorzugsweise bis 1500 hPa, liegen.

Weiterhin kann es vorteilhaft sein, die Reduktion bei pulsierendem Partialdruck des inerten Trägergases durchzuführen, wobei der Partialdruck vorzugsweise um einen mittleren Druck von 50 bis 500 hPa mit einer Amplitude von 100 bis 150 hPa oszilliert. Die Oszillationsfrequenz kann vorteilhaft 20 bis 300 s, besonders bevorzugt 30 bis 120 s betragen. Hierdurch wird Magnesiumfreies inertes Trägergas aus den Poren der Schüttung "herausgepumpt" und Magnesium-haltiges inertes Trägergas in die Poren "hineingepumpt".

Die erfindungsgemäß erhaltenen Tantalpulver mit großer spezifischer Oberfläche sind für die Herstellung von Elektrolytkondensatoren mit spezifischen Kapazitäten im Bereich von 200.000 bis 300.000 pFV/g in an sich bekannter Weise durch desoxidierende Primärstrukturvergröberung, Pressen zu Anodenstrukturen, Sintern der Anodenstrukturen zu Anodenkörpern, Formieren und Anbringen der Gegenelektrode, geeignet.

Es wurde weiterhin gefunden, dass die erhaltenen Tantalpulver in hervorragender Weise für die Herstellung von Kondensatoren mit spezifischen Kapazitäten im Bereich von 60.000 bis 160.000 µFV/g geeignet sind, wenn diese einer Primärstrukturvergröberung um mindestens einen Faktor 2,5, vorzugsweise um mindestens einen Faktor 3, insbesondere bevorzugt um einen Faktor 4 bis 6, unterworfen werden, d.h. die spezifische Oberfläche wird um einen Faktor 2,5 bzw. 3, vorzugsweise um einen Faktor 4 bis 6 herabgesetzt. Die Primärstrukturvergröberung wird durch Vermischen der Tantalpulver mit in Bezug auf den Sauerstoffgehalt der Pulver überstöchiometrischen Mengen Magnesium und Erhitzen unter Inertgas durchgeführt.

Erfindungsgemäß werden nach Primärstrukturvergröberung Tantalpulver mit einer spezifischen Oberfläche von 0,9 bis 6 m²/g, vorzugsweise von 0,9 bis 4 m²/g, erhalten, die aus Agglomeraten von Primärstrukturen mit einer mittleren geringsten Abmessung von 0,15 bis 0,8 µm bestehen, wobei die Agglomeratteilchen eine hervorragende Stabilität aufweisen, die auf stabile Sinterbrücken zwischen den Primärteilchen zurückgeführt wird.

Die erfindungsgemäßen Tantalpulver mit vergröberter Primärstruktur bestehen bevorzugt aus Agglomeraten mit einer Teilchengrößenverteilung mit einem D10-Wert von 5 bis 30 µm, einem D50-Wert von 20 bis 100 µm und einem D90-Wert von 40 bis 250 µm nach ASTM B 822 (Gerät Malvern MasterSizer Sµ), wobei die Teilchengrößenverteilung im wesentlichen der Teilchengrößenverteilung der Oxid-reduzierten Tantalpulver entspricht.

Es wurde gefunden, dass die Pulveragglomerate eine hohe Agglomeratstabilität gegenüber Ultraschallbehandlung, gemessen als Quotient des D50-Wertes nach ASTM B 822 (Gerät Malvern Mastersizer) und des D50-Wertes nach Ultraschallbehandlung (D50_{US}-Wert), aufweisen.

Gegenstand der Erfindung sind dem gemäß Tantalpulver mit einer Stabilität gegenüber Ultraschallbehandlung, die durch einen Quotienten D50/D50_{US} von weniger als 2, vorzugsweise weniger als 1,5 charakterisiert sind. Zu dessen Bestimmung wird jeweils soviel Tantalpulver in 700 ml Wasser mit 30 mg des Benetzungsmittels Daxad 11 unter Rühren dispergiert, bis die Lichtschwächung im Bereich von etwa 20% liegt, um Mehrfachreflexionen des Laserstrahls bei der Bestimmungsmethode zu vermeiden. Die Konzentration des Tantalpulvers in der Suspension liegt dann bei ca. 0,02 bis 0,05 Vol.-%. Der D50-Wert wird dann nach ASTM B 822 bestimmt. Anschließend wird mit dem Ultraschallerreger des MasterSizer Sg-Gerätes unter weiterem Rühren 5 Minuten lang eine Ultraschallleistung von 60 Watt eingetragen. Dabei werden schwache Sinterbrücken der Agglomeratteilchen durch Stöße der Teilchen untereinander aufgebrochen. Eine längere Einwirkdauer des Ultraschalls bewirkt keine weitere Veränderung der Partikelverteilung. Anschließend wird erneut der D50-Wert nach ASTM B 822 (,,D50_{US}"-Wert) bestimmt.

Gegenstand der Erfindung ist nicht das Verfahren zur Herstellung derartiger Tantalpulver mit hoher Agglomeratstabilität, das dadurch gekennzeichnet ist, das in einer ersten Stufe Tantalpentoxid mittels dampfförmiger reduzierender Metalle bei einem Dampfpartialdruck von 5 bis 110 hPa zum Tantalmetall reduziert wird, das Pulver nach Abkühlung passiviert, von anhaftendem Oxid des reduzierenden Metalls befreit wird, und anschließend durch Vermischen mit Magnesium und Erhitzen auf 680 bis 850°C hinsichtlich seiner Primärstruktur vergröbert wird.

### Beispiele 1 bis 16

### A) Reduktion von Tantalpentoxid

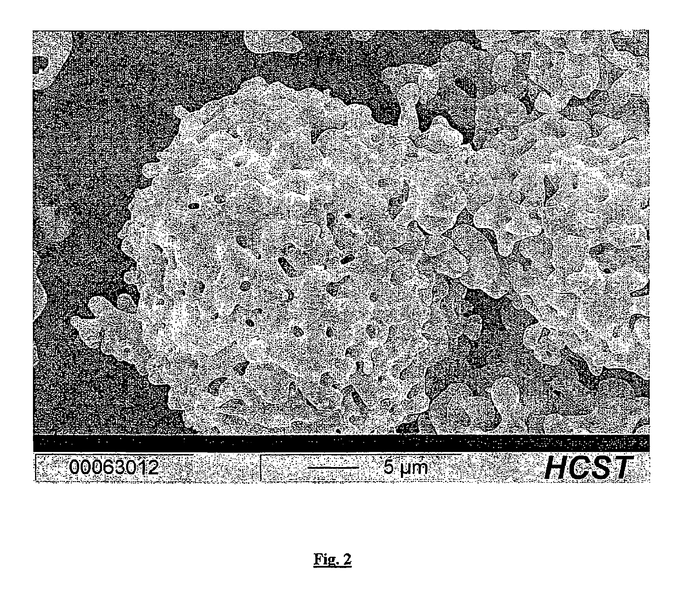

Es wird ein feinteiliges, teilversintertes Ausgangs-Tantalpentoxid mit einer mittleren Primärteilchengröße von ca. 0,01 µm (visuell bestimmt aus REM-Aufnahmen (REM = Rasterelektronenmikroskop)), einer nach ASTM B 822 (Gerät Malvern MasterSizer Sµ) bestimmten Teilchengrößenverteilung entsprechend einem D10-Wert von 17,8 µm, einem D50-Wert von 34,9 µm und einem D90-Wert von 71,3 µm und einer gemäß ASTM D 3663 bestimmten spezifischen Oberfläche (BET) von 0,14 m²/g eingesetzt. Die Einzelteilchen des Pulvers sind hochporös. Aus REM-Aufnahmen ist erkennbar, dass die Teilchen aus stark versinterten Agglomeraten von angenähert kugelförmigen Primärteilchen eines mittleren Durchmessers von 2,4 µm bestehen. Fig. 2 zeigt eine REM-Aufnahme des Ausgangspentoxides.

Das Ausgangs-Tantalpentoxid wird auf einem Geflecht aus Tantaldraht in einen mit Tantalblech ausgekleideten Reaktor oberhalb eines Tiegels, der die 1,1-fach stöchiometrische Menge (bezogen auf den Sauerstoffgehalt des Pentoxides) an Magnesium enthält, gegeben. Der Reaktor wird durch einen Ofen beheizt. Unterhalb des Magnesium enthaltenden Tiegels befindet sich am Reaktor eine Gaseinlassöffnung sowie oberhalb der Tantalpentoxidschüttung eine Gasabzugsöffnung. Der Gas-Innendruck des Ofens kann über eine die Ofenwand durchdringende Stichleitung gemessen werden. Als Schutzgas wird Argon eingesetzt, das langsam durch den Ofen strömt. Vor Beginn des Aufheizens auf die Reduktionstemperatur wird der Reaktor mit Argon gespült. Vor dem Erreichen der Reduktionstemperatur wird der Argondruck für die Reduktion eingestellt. Nach Beendigung der Reaktion und Abkühlen des Reaktors wird allmählich Luft in den Reaktor gegeben, um das Metallpulver gegen Abbrand zu passivieren. Das gebildete Magnesiumoxid wird durch Waschen mit Schwefelsäure und anschließend entmineralisiertem Wasser bis zur Neutralität entfernt.

Tabelle 1 zeigt die Reduktionsbedingungen und Eigenschaften der nach dem Abkühlen und Passivieren erhaltenen Pulver der Beispiele 1 bis 16. Die Werte "Mastersizer D10, D50 ,D90" sind nach ASTM B 822 bestimmt. In der rechten Spalte ist ferner der Sauerstoffgehalt des reduzierten Tantals bezogen auf die spezifische Oberfläche angegeben, d.h. der Quotient aus Sauerstoffgehalt in ppm und der nach BET gemessenen spezifischen Oberfläche. Ein oberflächlicher Sauerstoffgehalt von etwa 3000 ppm/(m²/g) ist erforderlich, da das Tantalpulver andernfalls pyrophor wäre und bei Kontakt mit der Umgebungsluft abbrennen würde.

Die Beispiele 1 bis 9 wurden bei im wesentlichen konstantem Argon-Druck und konstanter Reaktortemperatur durchgeführt. Die Reaktortemperatur definiert jeweils auch den Magnesiumdampfpartialdruck: 8 hPa bei 700°C, 19 hPa bei 750°C, 29 hPa bei 780°C, 39 hPa bei 800°C, 68 hPa bei 840°C, 110 hPa bei 880°C.

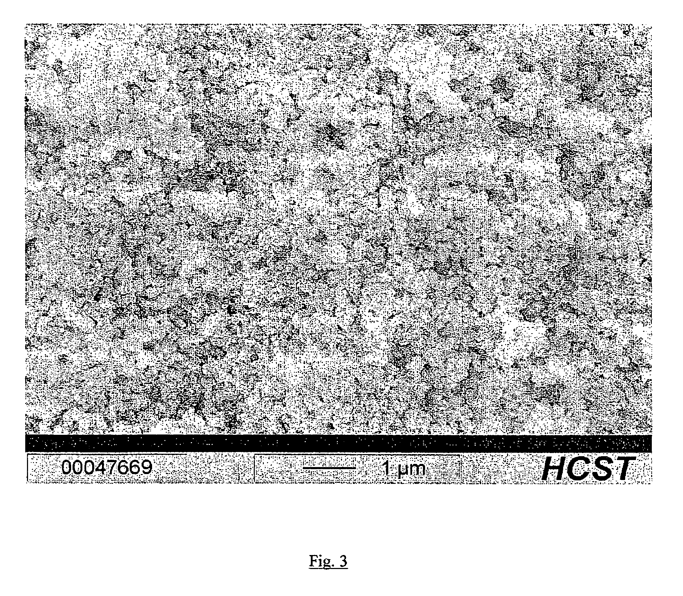

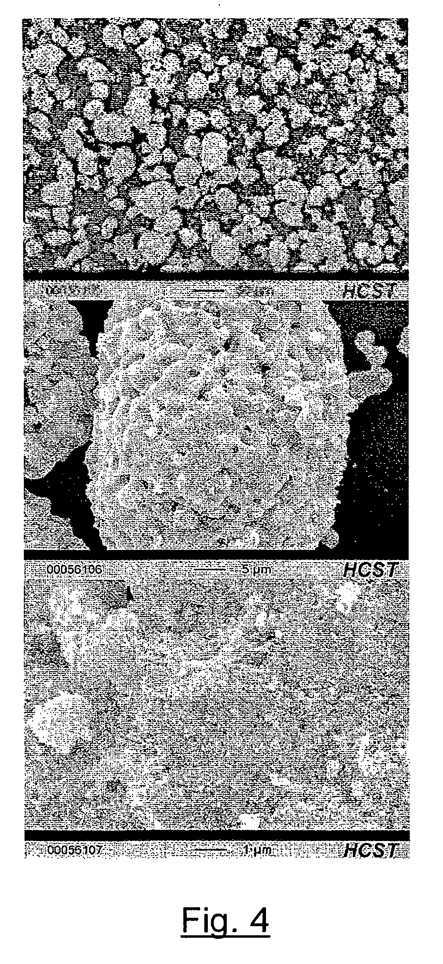

Fig. 3 zeigt eine REM-Aufnahme des Produktes nach Beispiel 9. Fig. 4 zeigt eine REM-Aufnahme des Produktes nach Beispiel 3.

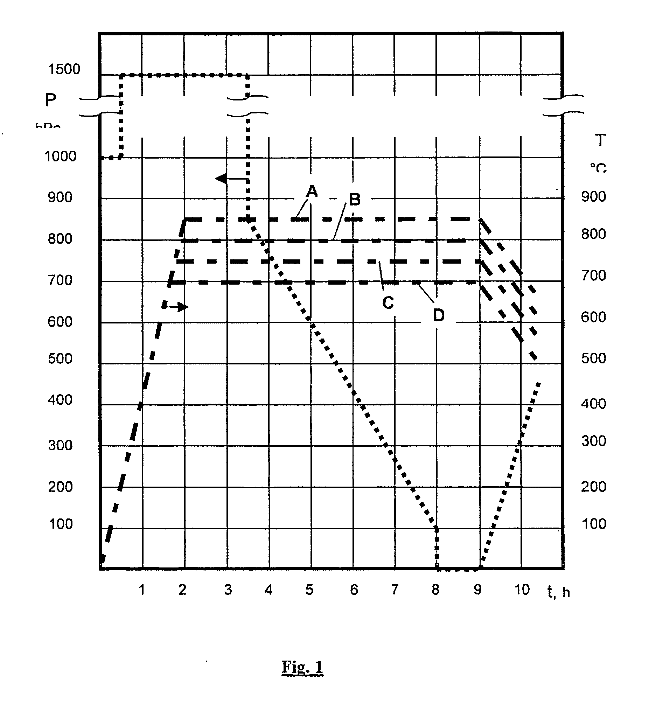

Bei den Beispielen 10 bis 13 wurde im wesentlichen bei konstanter Reaktortemperatur von 700, 750, 800 bzw. 850°C reduziert, jedoch wurde zunächst 1,5 Stunden bei einem hohen Argondruck von 1,5 Atmosphären und danach 4,5 Stunden bei von 850 hPa auf 100 hPa abnehmendem Argondruck reduziert. Der Verlauf von Druck und Temperatur sind in Fig. 1 dargestellt. Der hohe Druck am Anfang der Reduktion bewirkt eine Verlangsamung der Reduktionsgeschwindigkeit zu Beginn der exothermen Reaktion, so dass insgesamt eine Vergleichmäßigung der Reduktionsgeschwindigkeit bewirkt wird.

Die Beispiele 14 bis 16 wurden bei im wesentlichen gleichmäßig über 7 Stunden von 700 auf 780°C bzw. 720 auf 800°C bzw. 730 auf 800°C ansteigender Temperatur durchgeführt.

Die Primärkorngröße war bei allen Proben in etwa erhalten geblieben, ebenso wie die Korngrößenverteilung, die aus den Mastersizer D10-, D50- und D90-Werten erkennbar ist. Es ergab sich aber eine vom Dampfpartialdruck des reduzierenden Metalls abhängige spezifische Oberfläche. Der Sauerstoffgehalt aller Proben lag im wesentlichen bei etwa 3000 µg/m² (ppm/(m²/g)) Oberfläche, d.h. der Sauerstoffgehalt überstieg kaum den notwendigen Sauerstoffgehalt, damit die Pulver nicht im Kontakt mit der Umgebungsluft abbrannten.

Die Proben wurden anschließend einer standardisierten Behandlung im Ultraschallbad unterzogen, wobei schwache Sinterbrücken der Agglomerate zerstört wurden. Die Bestimmung der Korngrößenverteilung nach der Ultraschallbehandlung ergab die ebenfalls in Tabelle angegebenen D10_{US}-, D50_{US}- und D90_{US}-Werte. Das Verhältnis D50/D50_{US} kann als ein relatives Maß für die Stabilität der bei der Reduktion erzeugten Sinterbrücken angesehen werden. Es zeigt sich, dass die Sinterbrücken offenbar bereits nach der Reduktion um so stabiler sind, bei je niedrigerer Temperatur die Reduktion durchgeführt wurde.

### B) Desoxidation der Tantalpulver

Die Pulver der Beispiele 1 bis 16 wurden mit Ammoniumdihydrogenphosphatlösung getränkt und getrocknet, so dass eine Phosphordotierung von 150 ppm resultiert.

Die Pulver wurden anschließend mit einer auf ihren jeweiligen Sauerstoffgehalt bezogenen 1,2-fach stöchiometrischen Menge an Magnesium vermischt und unter Argon-Schutzgas für zwei Stunden auf 700°C bzw. 800°C erhitzt, abgekühlt, passiviert, vom Magnesiumoxid frei gewaschen und durch ein Sieb mit 300 µm Maschenweite gerieben. Die Teilchengrößenverteilung der erhaltenen Pulver (als D10-, D50,- und D90-Wert nach ASTM B 822, sowie entsprechende Werte nach standardisierter Ultraschallbehandlung) und die spezifische Oberfläche sind in Tabelle 2 angegeben.

Aus den Pulvern wurden Presskörper der Abmessung 3 mm Durchmesser und 3,96 mm Länge mit einer Pressdichte von 5,0 g/cm3 hergestellt, wobei in die Pressmatrize vor dem Einfüllen der Pulver ein Tantaldraht von 0,2 mm Dicke als Kontaktdraht eingelegt wurde. Die Presskörper wurden bei 1210°C im Hochvakuum während 10 Minuten versintert.

Die Anodenkörper wurden in 0,1%ige Phosphorsäure eingetaucht und bei einer auf 150 mA begrenzten Stromstärke bis zu einer Formierspannung von 16 V formiert. Nach Abfallen der Stromstärke wurde die Spannung noch eine Stunde aufrechterhalten. Zur Messung der Kondensatoreigenschaften wurde eine Kathode aus 18%iger Schwefelsäure eingesetzt. Es wurde mit einer Wechselspannung von 120 Hz gemessen.

Spezifische Kapazität und Reststrom sind in Tabelle 2 angegeben.

**Tabelle 1**

| Bsp. Nr. | Reduktionsbedingungen | | | Produkteigenschaften | | | | | | | | |
|---|---|---|---|---|---|---|---|---|---|---|---|---|
| | Gasdruck | Reaktor-Temperatur | Red.-Dauer | Spez. Oberfläche | Mastersizer D10 D50 D90 | | | O₂-Gehalt | Mastersizer nach US¹ D10_{US}D50_{US} D90_{US} | | | D50/D50_{US} |
| | hPa | °C | h | m²/g | µm | µm | µm | µg/m² | µm | µm | µm | |
| 1 | 50 | 700 | 8 | 13,4 | 14, | 30, | 52, | 3441 | 0,59 | 12,7 | 28,3 | 2,40 |
| 2 | 200 | 750 | 8 | 10,1 | 16, | 33, | 66, | 2765 | 0,59 | 13,6 | 33,7 | 2,43 |
| 3 | 350 | 750 | 8 | 12,3 | 14, | 31, | 53, | 3064 | 0,58 | 10,1 | 29,7 | 3,08 |
| 4 | 500 | 780 | 8 | 7,3 | 14, | 29, | 49, | 4063 | 0,53 | 9,5 | 24,1 | 3,13 |
| 5 | 500 | 840 | 8 | 6,3 | 12, | 26, | 43, | 2492 | 0,53 | 8,0 | 23,5 | 3,36 |
| 6 | 550 | 860 | 8 | 4,4 | 11, | 26, | 44, | 2654 | 0,61 | 8,2 | 25,9 | 3,27 |
| 7 | 580 | 880 | 8 | 4,7 | 9,3 | 26, | 48, | 2787 | 0,55 | 5,9 | 21,8 | 4,51 |
| 8* | 580 | 900 | 8 | 3,8 | 16, | 32, | 59, | 2872 | 0,67 | 6,3 | 19,2 | 5,19 |
| 9* | 1000 | 940 | 8 | 2,7 | 16, | 34, | 60, | 2798 | 0,71 | 14,1 | 27,7 | 2,45 |
| 10 | s.Fig.1 | D, Fig.1 | s.Fig. | 12,9 | 15, | 37, | 61, | 3362 | 0,61 | 13,2 | 29,7 | 2,82 |
| 11 | s.Fig.1 | C, Fig. 1 | s.Fig. | 9,7 | 14, | 35, | 58, | 3257 | 0,63 | 11,3 | 26,8 | 3,15 |
| 12 | s.Fig.1 | B,Fig.1 | s.Fig. | 7,3 | 16, | 38, | 62, | 2912 | 0,55 | 10,5 | 25,7 | 3,67 |
| 13 * | s.Fig.1 | A,Fig. 1 | s.Fig. | 5,9 | 17, | 40, | 59. | 2974 | 0,58 | 11,2 | 27,1 | 3,59 |
| 14 | 250 | 700->780 | 7 | 11,7 | 16, | 39, | 58, | 3196 | 0,60 | 14,6 | 31,3 | 2,71 |
| 15 | 350 | 720->800 | 7 | 10,2 | 18, | 42, | 63, | 3027 | 0,64 | 15,1 | 32,4 | 2,84 |
| 16 | 450 | 730->800 | 7 | 10,4 | 16, | 43, | 62, | 3065 | 0,63 | 15,0 | 33,6 | 2,89 |

| | | | | | | | | | | | | |
|---|---|---|---|---|---|---|---|---|---|---|---|---|
| ¹: US = Ultraschallbehandlung *Vergleichsbeispiel * Vergleichsbeispiel | | | | | | | | | | | | |

**Tabelle 2**

| Bsp. Nr. | Desoxidationstemp. | Produkteigenschaften nach Primärstrukturvergröberung | | | | | | | | Kondensator | |
|---|---|---|---|---|---|---|---|---|---|---|---|
| | | Mastersizer | | | Mastersizer nach US¹ | | | D50/D50_{US} | Spez. Oberfläche | Spez. Kapazität | Spez. Reststrom |
| | | D10 | D50 | D90 | D10_{US} | D50_{US} | D90_{US} | | | | |
| | °C | µm | µm | µm | µm | µm | µm | | m²/g | µFV/g | nA/µFV |
| 1 | 700 | 18,9 | 49,9 | 215,9 | 12,3 | 40,6 | 72,3 | 1,23 | 2,79 | 142084 | 1,22 |
| 2 | 700 | 18,5 | 39,9 | 216,7 | 6,9 | 23,9 | 74,6 | 1,67 | 3,02 | 153836 | 0,49 |
| 3 | 700 | 18,3 | 38,7 | 213,3 | 7,1 | 25,0 | 71,8 | 1,55 | 2,89 | 144489 | 1,42 |
| 4 | 700 | 15,9 | 32,4 | 75,5 | 0,89 | 17,1 | 40,1 | 1,89 | 3,11 | 156347 | 0,67 |
| 5 | 800 | 14,2 | 28,8 | 47,8 | 0,79 | 15,8 | 32,1 | 1,82 | 1,83 | 103484 | 0,46 |
| 6 | 800 | 15,2 | 31,4 | 67,1 | 1,52 | 15,9 | 38,5 | 1,98 | 1,87 | 106705 | 0,64 |
| 7 | 800 | 18,8 | 35,8 | 67,1 | 0,96 | 18,7 | 43,4 | 1,91 | 1,92 | 107931 | 0,86 |
| 8* | 700 | 18,9 | 36,5 | 72,8 | 1,05 | 15,2 | 47,5 | 2,40 | 2,90 | 145131 | 0,97 |
| 9* | 800 | 17,3 | 34,8 | 63,2 | 6,38 | 16,5 | 51,2 | 2,11 | 1,90 | 105393 | 0,46 |
| 10 | 700 | 17,9 | 40,6 | 201,5 | 10,1 | 30,1 | 70,7 | 1,35 | 2,85 | 140711 | 1,35 |
| 11 | 800 | 18,1 | 41,7 | 199,7 | 11,3 | 27,6 | 71,8 | 1,51 | 1,93 | 101444 | 1,01 |
| 12 | 800 | 16,1 | 31,8 | 80,4 | 1,03 | 20,1 | 42,3 | 1,58 | 1,81 | 100913 | 0,68 |
| 13* | 700 | 15,4 | 31,5 | 140,9 | 1,95 | 15,2 | 41,4 | 2,07 | 3,05 | 150709 | 0,88 |
| 14 | 800 | 17,7 | 39,3 | 190,7 | 8,4 | 29,8 | 69,5 | 1,32 | 1,68 | 96631 | 1,21 |
| 15 | 800 | 17,9 | 40,5 | 180,3 | 11,7 | 29,1 | 70,5 | 1,39 | 1,75 | 98770 | 1,41 |
| 16 | 700 | 17,8 | 36,3 | 187,8 | 6,3 | 21,1 | 65,3 | 1,72 | 2,99 | 143576 | 1,29 |

| | | | | | | | | | | | |
|---|---|---|---|---|---|---|---|---|---|---|---|
| ¹: US = Ultraschallbehandlung * Vergleichsbeispiel | | | | | | | | | | | |

## Patentansprüche

1. Tantalpulver, wobei das Tantalpulver eine spezifische Oberfläche von 0,9 bis 6 m²/g, eine Agglomerat-Stabilität von weniger als 2, bestimmt als der nach ASTM B 822 ermittelte D50-Wert des Pulvers, dividiert durch den nach ASTM B 822 ermittelten D50ᵤₛ-Wert desselben Pulvers nach 5 minütiger Ultraschallbehandlung mit einer Ultraschallleistung von 60 Watt, wobei zur Bestimmung des D50-Wertes und D50ᵤₛ-Wertes soviel Tantalpulver in 700 ml Wasser mit 30 mg des Benetzungsmittels Daxad 11 unter Rühren dispergiert wird, bis die Lichtschwächung in Bereich von etwa 20 % liegt, wobei die Konzentration des Tantalpulvers in der Suspension bei etwa 0,02 bis 0.05 Vol.-% liegt.

2. Tantalpulver nach Anspruch 1, wobei das Tantalpulver eine Agglomerat-Stabilität von weniger als 1, 7 aufweist.

## Claims

1. Tantalum powder, wherein the tantalum powder has a specific surface area of from 0.9 to 6 m²/g, an agglomerate stability of less than 2, determined as the D50 of the powder determined in accordance with ASTM B 822 divided by the D50ᵤₛ of the same powder determined in accordance with ASTM B 822 after ultrasonic treatment using an ultrasound power of 60 watt for 5 minutes, where, for the determination of the D50 and D50ᵤₛ, tantalum powder is dispersed in 700 ml of water containing 30 mg of the wetting agent Daxad 11 with stirring until the light attenuation is in the region of about 20%, where the concentration of the tantalum powder in the suspension is from about 0.02 to 0.05% by volume.

2. Tantalum powder according to Claim 1, wherein the tantalum powder has an agglomerate stability of less than 1.7.

## Revendications

1. Poudre de tantale, la poudre de tantale ayant une surface spécifique de 0,9 à 6 m²/g, une stabilité d'agglomérat inférieure à 2, déterminée en tant que la valeur D50 de la poudre calculée selon ASTM B 822, divisée par la valeur D50_{US} de la même poudre calculée selon ASTM B 822 après un traitement par ultrasons de 5 minutes à une puissance d'ultrasons de 60 Watt, suffisamment de poudre de tantale étant dispersée dans 700 ml d'eau avec 30 mg de l'agent mouillant Daxad 11 sous agitation pour que l'atténuation de lumière se situe dans la plage d'environ 20 % pour la détermination de la valeur D50 et de la valeur D50_{US}, la concentration de la poudre de tantale dans la dispersion se situant d'environ 0,02 à 0,05 % en volume.

2. Poudre de tantale selon la revendication 1, dans laquelle la poudre de tantale présente une stabilité d'agglomérat inférieure à 1,7.
